# EUROPEAN PATENT APPLICATION

(11) **EP 1 283 638 A1**
(43) Date of publication of application: **12.02.2003**
(21) Application number: 02021164.5
(22) Date of filing: 17.03.1995
(51) Int. Cl.: H04N 7/167

(54) **Crypt key system**

(30) Priority: 08.04.1994 JP 7064394
(62) Divisional of application: 95103978.3
(71) Applicant: MITSUBISHI CORPORATION, Tokyo 100 (JP)
(72) Inventor: Momiki, Shunichi, Higashimurayama-shi, Tokyo (JP); Saito, Makoto, Tama-shi, Tokyo (JP)
(74) Representative: Pfenning, Meinig & Partner GbR

(57) **Abstract**

In a database or a CATV system for charging a fee using a permit key, to prevent troubles, which may occur when there are too any requests for the permit key, the permit key is broadcast via data multiplex broadcasting or via data broadcasting.

A user who wishes to use the database requests for use to a database host station. To this request, the database host station charges the fee for use and transmits an encrypted data. The user requested for use decrypts the encrypted data by the received permit key and uses the data.

A viewer who wishes to view a scrambled CATV program requests for viewing to a CATV station. To this request, the CATV station charges the fee and transmits a scrambled picture. The viewer requested for viewing descrambles the scrambled picture by the received permit key and views the picture.

## Description

### BACKGROUND OF THE INVENTION

### (Field of the Invention)

The present invention relates to a system for supplying information of database system or cable television system.

### (Prior Art)

In the information-oriented society of today, satellite broadcasting via satellite called broadcasting satellite (BS) or communication satellite (CS), and cable television broadcasting called CATV (cable television) using coaxial cable or optical fiber cable are being propagated in addition to the existing terrestrial wave broadcasting.

In CATV, which can distribute on several tens of channels at the same time, in addition to unscrambled general channels, which viewers can view by a comprehensive subscription, scrambled pay channels such as those for motion pictures, sports, music, etc. are provided, which can not be viewed by the comprehensive subscription. To view these scrambled channels, it is necessary to subscribe for descrambling. However, since the period of subscription is usually about one month, it is not always possible to view the program by request at the desired time.

In order to view live sports program, motion picture program or music program broadcast by scrambled satellite TV broadcasting or CATV channel, there is a system for viewing per program, in which a viewing time recorder is installed for each television set and payment is made according to the record of actual viewing time. However, such system requires much labor and cost for control and fee collecting.

On the other hand, in the information-oriented society of today, a database system is being propagated, in which various types of data independently stored by computers in the past can be used by connecting each computer via communication lines.

The information handled so far in such a database system is coded information with relatively less amount of information or picture data, which can be processed by computer, and it is not possible to handle picture data such as natural picture or animation.

Under such circumstances, technique has been developed to process picture signal such as television signal by compressing and expanding by computer. As common standards for this purpose, there are JPEG (Joint Photographic image coding Experts Group) standards for still picture, H.261 standards for television conference, MPEG1 (Moving Picture image coding Experts Group 1) standards for storing pictures, and MPEG2 standards to cover the current television broadcasting and high definition television broadcasting, and attention is now focused on "multi-media system" for simultaneously handling various types of data processed by computers and picture data by digitizing picture signal as the technique of the future.

This multi-media system is also incorporated in data communication and is utilized as one of the data on database.

With the range of utilization of database being expanded as described above, it becomes an important issue how to handle the charge for utilization of the data on database. To reliably charge the fee, it is necessary to provide a system, where data cannot be used unless the user is a regular subscriber, and the best means for this purpose is to encrypt the data.

In such case, however, it is necessary to deliver a decrypting key to the user so that the regular user can decrypt the encrypted data and use the data. Moreover, to ensure the charging more reliably, it is desirable to change the cryption key for each data. In such case, it is necessary to deliver different decrypting key for each data, and this leads to very troublesome procedure.

To solve the above problems, a system has been proposed by the present inventors in Japanese Patent Application 4-199942 ( GB-9314848.4, DE-P4323569.7, and FR-9309213) and Japanese Patent Application 4-289074 (GB-9321742.0, DE-P4335835.7 and FR-9312725). In these patent applications, it is provided that by a request for viewing a scrambled program via public telephone line, a charging center transmits a viewing permit code for viewing the scrambled program to a data communication device and charges and collects a fee. Upon receipt of the viewing permit code, a receiving device descrambles the program according to the viewing permit code and allows the viewer to view the program. Also, to a user for using encrypted data requested via public telephone line for using encrypted data, a charging center transmits a use permit code for using encrypted data to a data communication device and charges and collects the fee. Upon receipt of the use permit code, a receiving device decrypts the encrypted data according to the use permit code and allows the user to use the data. A device for this purpose is disclosed in Japanese Patent Application 4-276941 (GB-9321202.5, DE-P4334931.5 and FR-9312285) by the present inventors.

In the following, an outline of the invention disclosed in the prior applications will be described.

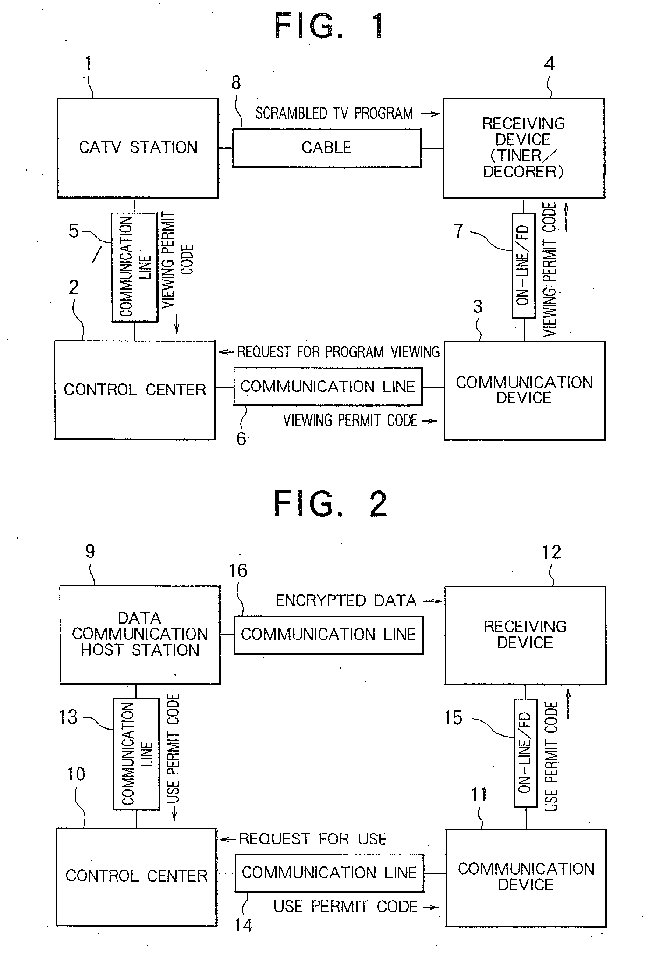

Fig. 1 shows a charging system for CATV. This charging system comprises a CATV station 1, a viewing permit code/charging control center ( "control center" ) 2, a communication device 3 and a tuner/decoder ( "receiving device" ) 4. A dedicated communication line 5 is used for communication between the CATV station 1 and the control center 2, a communication line 6 such as public telephone line connects between the control center 2 and the communication device 3, and between the communication device 3 and the receiving device 4 is connected by supply means 7 such as on-line or off-line means using flexible disk, and between the CATV station 1 and the receiving device 4 is connected by cable 8, such as coaxial cable or optical fiber cable.

The CATV station 1 transmits scrambled television signal to a receiving device 4, and deposits a viewing permit code (a permit key) including descramble data for descrambling to a control center 2 in advance.

A control center 2 transmits a permit key to a communication device 3 corresponding to a viewer's request for viewing a scrambled television program via a communication line 6 using a communication device 3, and charges a fee.

The viewer receives the permit key by the communication device 3, sends the permit key to the receiving device 4 by supply means 7, and the receiving device 4 descrambles the scrambled television program by the sent permit key. Thus, the viewer requested for viewing the scrambled television program can view the television program.

In addition to the scrambled television program, the charging system is also applicable to data multiplex broadcasting, which is multiplexed and broadcast on television broadcasting program or FM audio broadcasting.

Fig. 2 represents a block diagram of a charging system which is applied to data communication used in database.

This charging system comprises a data communication host station 9 such as database, a control center 10, a data communication device 11 and a receiving device 12. The data communication host station 9 and the control center 10 are connected by a dedicated communication line 13, the control center 10 and the communication device 11 are connected by a communication line 14 such as public telephone line, the communication device 11 and the receiving device 12 are connected by appropriate means 15 such as direct on-line means or off-line means such as flexible disk, and the data communication host station 9 and the receiving device 12 are connected by a communication line 16 such as public telephone line.

The data communication host station 9 transmits encrypted data to the receiving device 12 and deposits in advance a use permit code ( "a permit key" ) including data for decrypting data at the control center 10.

The control center 10 transmits the permit key corresponding to a user's request for using the encrypted data via communication line 13 using the communication device 11, and charges a fee.

The user receives the permit key by the communication device 11, sends the permit key to the receiving device 12 by supply means 15, and the receiving device 12 decrypts the encrypted data by the sent permit key. Thus, the user requested for using encrypted data is allowed to use the data.

By the system according to the invention described in the prior applications, it is possible to reliably deliver and receive the permit key and charge the fee for at the sametime and in reliable manner.

However, the request for using data and the transmission of the permit key are executed via general communication line such as public telephone line. For this reason, the requests may not be processed adequately when there are too many requests at the same time.

### SUMMARY OF THE INVENTION

It is an object of the present invention to provide a crypt key system, by which it is possible, in a database or CATV system for charging a fee using a permit key, to process a request for the permit key even when there are too many requests, and not to charge the fee if the received permit key has not been used.

It is further object of the present invention to provide method for utilizing the crypt key with security and without increasing the cost.

To attain the above objects, the permit key is broadcast via data multiplex broadcasting or data broadcasting.

A user for using database requests for use to a database host station. To this request for use, the database host station charges a fee and transmits encrypted data. The user requested for use of data decrypts the encrypted data by a received permit key, and uses the data.

A viewer requests for viewing CATV scrambled program to a CATV station. To this request, the CATV station charges the fee and transmits the scrambled program. The viewer requested for viewing descrambles the scrambled program by a received permit key, and views the program.

The permit key can be obtained free of charge by data broadcasting, and the fee is charged when the data has been actually used or the program has been actually viewed.

Further, as the methods to utilize crypt key, there are a way, in which a non-crypted permit key is broadcast by data broadcasting, and encrypted data or scrambled picture is transmitted from the database host station or the CATV station, and the encrypted data is decrypted or the scrambled picture is descrambled by the non-crypted permit key broadcast by the data broadcasting; another way, in which an encrypted permit key is broadcast by data broadcasting, encrypted data or scrambled picture are transmitted from the database host station or the CATV station, the encrypted permit key is decrypted by a decryption key incorporated in the equipment used or by a decryption key given in advance, and the encryption of the data is decrypted or the scramble of the picture is descrambled by the decrypted permit key; or other way, in which an encrypted permit key is broadcast by data broadcasting, encrypted data or scrambled picture are transmitted from the database host station or the CATV station, a decryption key for decrypting the encrypted permit key is transmitted together with the encrypted data or the scrambled picture from the database host station or the CATV station, the encrypted permit key is decrypted by the decryption key, and the encrypted data is decrypted or the scrambled picture is descrambled by the decrypted permit key.

### BRIEF DESCRIPTION OF THE DRAWINGS

Fig. 1 is a block diagram for a CATV system described in the prior patent applications;
Fig. 2 is a block diagram of a database system described in the prior patent applications;
Fig. 3 is a block diagram of a database system, in which the present invention is applied;
Fig. 4 is a block diagram of a CATV system, in which the present invention is applied;
Figs. 5A, 5B and 5C represent application examples of a crypt key system of the present invention;
Fig. 6 is a detailed block diagram of a database system, in which the present invention is applied;
Fig. 7 is a detailed block diagram of another database system, in which the present invention is applied;
Fig. 8 is a detailed block diagram of a CATV system, in which the present invention is applied;
Fig. 9 is a detailed block diagram of another CATV system, in which the present invention is applied;
Fig. 10 is a detailed block diagram of another CATV system, in which the present invention is applied;
Fig. 11 is a detailed block diagram of another CATV system, in which the present invention is applied;
Fig. 12 is a detailed block diagram of another CATV system, in which the present invention is applied;
Fig. 13 is a detailed block diagram of another CATV system, in which the present invention is applied; and
Fig. 14 is a detailed block diagram of another CATV system, in which the present invention is applied.

### DETAILED DESCRIPTION OF THE PREFERRED EMBODIMENTS

In the following, description will be given on embodiments of the present invention referring to the drawings.

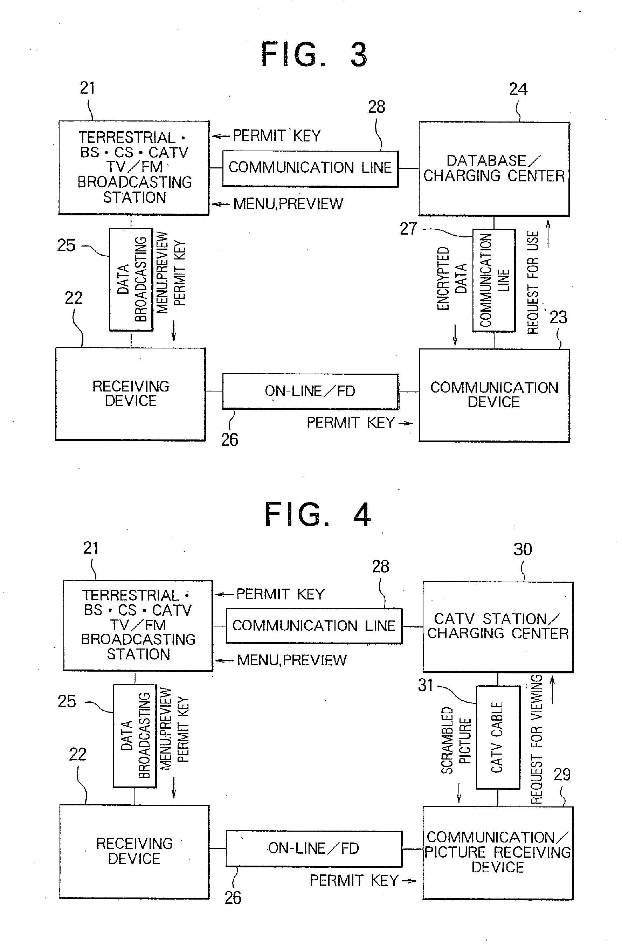

Fig. 3 is a block diagram showing a basic construction of a system, in which the present invention is applied to database.

This system comprises a broadcasting station 21 for broadcasting data by BS, CS or terrestrial wave television or by multiplex broadcasting such as FM or by data broadcasting, a database/charging center 24, serving as database and also serving for charging, a receiving device 22 for receiving the broadcast data, and a data communication device 23 for carrying out data communication with the database/charging center 24.

The broadcasting station 21 and the database/charging center 24 are connected by supply means 28, i.e, on-line communication means such as a dedicated communication line or off-line means such as flexible disk, the database/charging center 24 and the communication device 23 are connected by communication line 27 such as public telephone line, the broadcasting station 21 and the receiving device 22 are connected by broadcasting waves 25, and the receiving device 22 and the communication device 23 are connected by appropriate supply means 26 i.e., direct on-line means or off-line means such as flexible disk.

In this system, the database/charging center 24 supplies a use permit code ( "a permit key" ), including data for decrypting individual encryption of the data to be supplied, to the broadcasting station 21 by supply means 28. In this case, for convenience or promotion of data use, a menu showing a table of contents including the titles of the data available or a preview showing brief description of the data are also supplied.

The broadcasting station 21 broadcasts the permit key, which is with encrypted or without encrypted, the menu and the preview as supplied from the database/charging center 24.

Upon receipt of the permit key, the menu and the preview broadcast from the broadcasting station 21, the receiving device 22 sends them to the data communication device 23 connected elctrically with, by supply means 26 directly on on-line basis or on off-line basis after recording them on flexible disk.

A user who wishes to use the data of the database 24 requests for use to the database/charging center 24 via a communication line 27 such as public telephone line using the data communication device 23.

The database/charging center 24 encrypts the data, to which the user has requested for use, transmits it to the communication device 23, and charges the fee.

Upon receipt of the encrypted data, the data communication device 23 decrypts the encrypted data transmitted from the database 24 using the permit key sent from the receiving device 22 to be used.

Fig. 4 is a block diagram of a basic construction of a system, in which the present invention is applied to a CATV system.

This system comprises a broadcasting station 21 for broadcasting data by BS, CS, or terrestrial wave television or by multiplex broadcasting such as FM or by data broadcasting, a CATV/charging center 30 serving as a CATV station and also serving for charging, and a communication/picture receiving device 29 for requesting for viewing to the CATV/charging center 30 and also for receiving picture signal from the CATV station 30.

The broadcasting station 21 and the CATV/charging center 30 are connected by supply means 28, i.e, on-line means such as a dedicated communication line or by off-line means such as flexible disk, the CATV/charging center 30 and the communication/picture receiving device 29 are connected by a CATV cable 31, and the broadcasting station 21 and the receiving device 22 are connected by broadcasting waves 25, the receiving device 22 and the communication/picture receiving device 29 are connected by supply means 26, i.e, direct on-line means or off-line means such as flexible disk.

In this system, the CATV/charging center 30 supplies a viewing permit code ( "a permit key" ) , including data for descrambling each scrambled program to be supplied, to the broadcasting station 21 by supply means 28, i.e, communication means such as a dedicated communication line or by flexible disk. In this case, for convenience in viewing, a menu of the programs available including their titles, or a preview introducing the programs such as preliminary announcement are also supplied in order to promote the viewing of the programs.

The broadcasting station 21 broadcasts the permit key, which is with encrypted or without encrypted, the menu and the preview as supplied from the CATV/charging center 30.

Upon receipt of these data broadcast from the broadcasting station 21, the receiving device 22 supplies these data to the electrically connected communication/picture receiving device 29 by supply means 26, i.e, direct on-line means or off-line means after recording them on flexible disk.

The CATV/charging center 30 scrambles the program and transmits it to the communication/picture receiving device 29.

A viewer who wishes to view the program requests for viewing of the program to the CATV/charging center 30 via communication line such as public telephone line or via CATV cable 31 using communication function of the communication/picture receiving device.

Upon receipt of the request for viewing, the CATV/charging center 30 charges the fee for viewing the program, and collects the fee.

The communication/picture receiving device 29 receives the scrambled program from the CATV station 30, and descrambles it using the permit key supplied from the receiving device 22.

If the permit key is duplicated or falsified, use beyond the pemitted range can be performed. To prevent such manner, the number of use times of the permit key is limited to one time or to several times.

In the system described in the prior patent applications, the fee is charged before the permit key is actually used. Thus, inconveniences may arise if the effective period is limited. In contrast, in the invention of the present application, the permit key is available free of charge by the data broadcasting, and the fee is charged when actually the data is used or the program is viewed. Therefore, no inconvenience arises even when the effective period is limited. Preview of television program currently in practice normally covers one week, and an effective period of about one week may be set to the permit key.

If the permit key is encrypted, it is possible to prevent duplication or falsification of the permit key. However, if the permit key is encrypted, the permit key cannot be used unless decrypted.

To decrypt, it is necessary to have the key for decryption. In case the number of the users for the key is not many, the key can be delivered to them. However, in case the number of the users is unlimited as in the system of the present invention, such approach is not adequate.

For this purpose, a method has been proposed, by which the key for decrypting is stored in ROM in the equipment to be used. However, this may lead to increase of equipment cost, and there is no guarantee that the key is not cryptanalyzed.

In the following, description will be given on a method to use crypt key which can be used for the crypt key system of the present invention and which guarantees security and involves no cost increase.

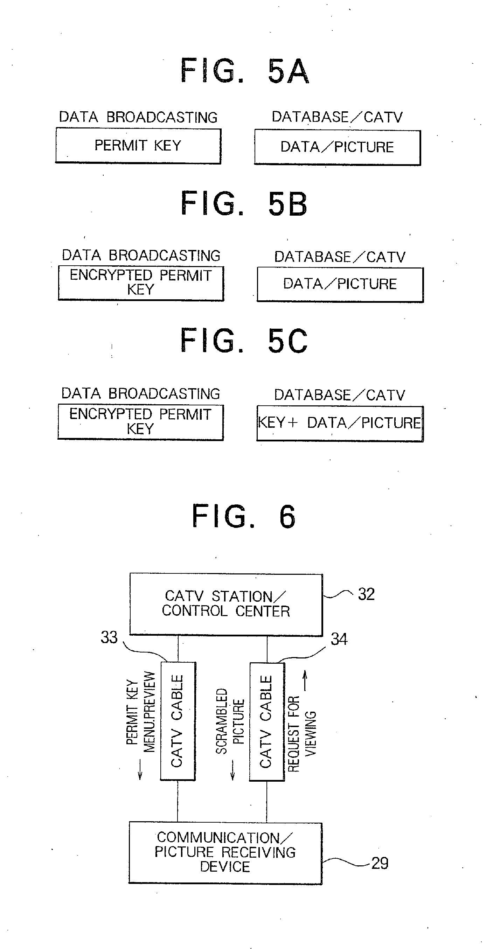

Figs. 5A, 5B and 5C schematically illustrate a method to use the crypt key of the present invention, in which Fig. 5A represents a method to use crypt key shown in Fig. 4, and Figs. 5B and 5C represent the method to use crypt key without relying on the method of Fig. 4.

In Fig. 5A, a non-crypted permit key is broadcast by data broadcasting, and encryted data or scrambled picture are transmitted from a database host station or a CATV station. Encrypted data is decrypted or the scrambled picture is descrambled by the non-crypted permit key, which has been broadcast by data broadcasting.

In Fig. 5B, an encrypted permit key is broadcast by data broadcasting, and encrypted data or scrambled picture are transmitted from the database host station or the CATV station. Cryption of the permit key is decrypted by decryption key incorporated in the equipment or by the decrypting key given in advance. By the decrypted permit key, the data is decrypted or the picture is descrambled.

The method shown in Fig. 5C is the same as the method shown in Fig. 5B in that the encrypted permit key is broadcast by the data broadcasting and the encrypted data or the scrambled picture are transmitted from the database host station or the CATV station. However, in the method shown in Fig. 5C, a decryption key for decrypting the encrypted permit key is transmitted together with the encrypted data or the scrambled picture from the database host station or the CATV station.

The cryption of the permit key is decrypted by the decryption key, and then, this decrypted permit key decrypts the encrypted data or descrambles the scrambled picture.

CATV system is broadcasting television programs. Description is now given on how the permit key is transmitted by this broadcasting.

The system shown in Fig. 6 comprises a CATV station/control center 32, serving as a broadcasting station and also as a CATV/charging center, and a communication/picture receiving device 29, serving also as a receiving device, in contrast to the system shown in Fig. 4, which comprises a broadcasting station 21, a receiving device 22, a CATV/charging center 30 and a communication/picture receiving device 29. CATV station/control center 32 and the communication/picture receiving device 29 are connected only by CATV cables 33 and 34.

In this system, the CATV/control center 32 broadcasts a menu of programs and a preview via data channel of the CATV cable 33 together with the permit key, 'which includes data for descrambling individual program.

These data broadcast from the CATV station/control center 32 are received by the communication/picture receiving device 29.

A viewer, who wishes to view the program, requests for viewing of the program to the CATV station/control center 32 via CATV cable 34 using communication function of the communication/picture receiving device 29.

Upon receipt of the request for viewing, the CATV station/control center 32 transmits scrambled program via the CATV cable 34, transmits a permit key via the CATV cable 33, and charges a fee for viewing the program.

Upon receipt of the scrambled program, the communication/picture receiving device 29 descrambles the requested program using the permit key, which has been broadcast via data channel.

In Fig. 6, two cables (i.e. CATV cables 33 and 34) are used, while two-way communication may be performed by the use of a single cable.

In the above, description has been given on a basic arrangement of a system, in which the present invention is applied to database or to CATV. Next, description will be given on the details of data broadcasting, as well as how to apply for use of database, and how to apply for CATV.

In the system, in which the present invention is applied to database, the permit key, menu and preview are broadcast, and in the system, in which the present invention is applied to CATV, the permit key, menu of programs and preview are broadcast, as data broadcasting. This has been already explained in the above.

In case database is utilized, it is necessary to have information as to which data is contained in the database. For this purpose, it is convenient for the user if a guide how to use the database and a menu are broadcast together with the permit key. In this case, if a brief description of the content of the data is added, it will be more convenient.

The same applies to the case where the viewer wishes to view CATV. In case of CATV, the,use of CATV can be promoted if a menu of programs or a preview for the programs are broadcast.

These menu, preview of programs, and brief description of the programs can be broadcast when necessary, while it would be convenient for the users and the viewers if these are broadcast at the same time as the permit key.

The request for use of database is executed only by the menu, but the request for viewing CATV program can be executed by indicating the broadcasting time in addition to the menu of programs.

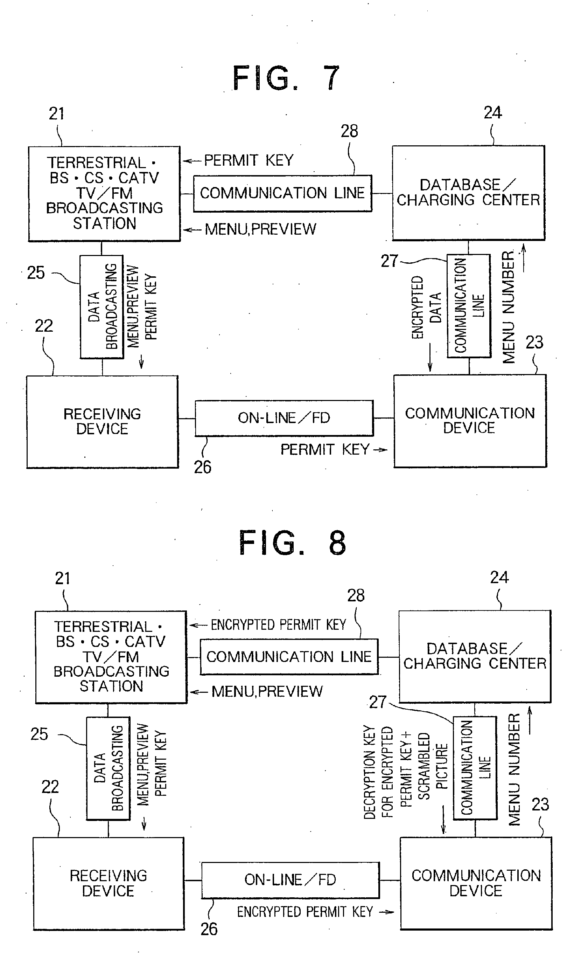

Description will be given on the details referring to Figs. 7 to 14.

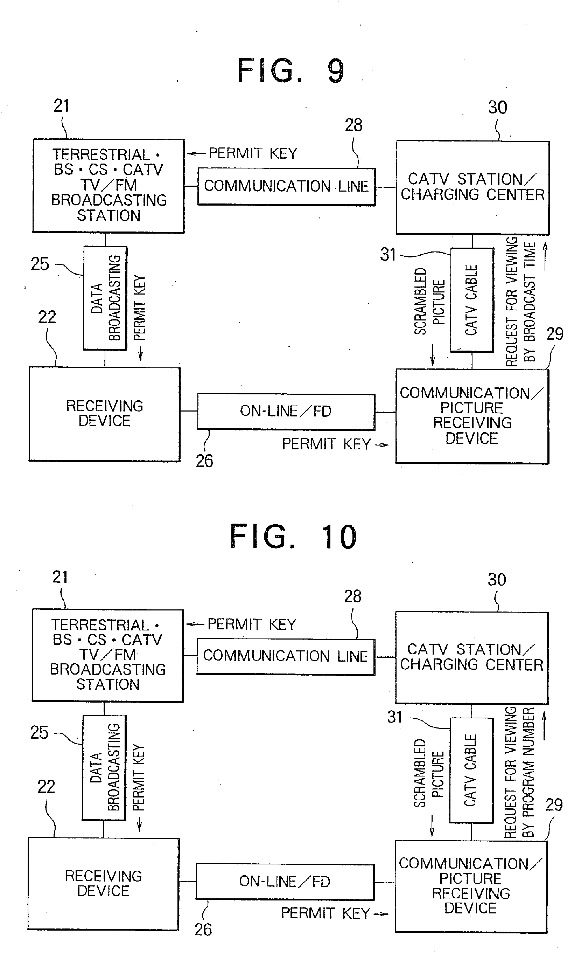

In these figures, the examples shown in Fig. 7 and Fig. 8 relate to the database, and the examples shown in Figs. 9 to 14 relate to CATV.

The component elements shown in these figures are the same as those given in Fig. 3 and Fig. 4, and detailed description is not given here.

In a system shown in Fig. 7, in which the present invention is applied to database, a database/charging center 24 supplies a non-crypted permit key, a menu and a preview to a broadcasting station 21 in advance.

The broadcasting station 21 broadcasts the permit key, the menu and the preview as supplied from the database/charging center 24.

A receiving device 22 receives the permit key, the menu and the preview, and sends them to a communication device 23.

A user who wishes to use the data requests to the database/chargig center 24 by indicating the number of the menu using the communication device 23.

The database/charging center 24 encrypts the requested data and transmits it to the communication device 23, and further charges a fee for data use.

Upon receipt of the encrypted data, the communication 'device 23 decrypts the encrypted data transmitted from the database using the permit key sent from the receiving device 22 so that the data will be ready for use.

In a system shown in Fig. 8, in which the present invention is applied to database, a database/charging center 24 supplies an encrypted permit key, a menu and a preview to a broadcasting station 21 in advance.

The broadcasting station 21 broadcasts the encrypted permit key, the menu and the preview as supplied from the database/charging center 24.

A receiving device 22 supplies the permit key, the menu and the preview to a communication device 23.

A user who wishes to use the data requests to the database/charging center 24 by indicating the number of the menu using the communication device 23.

The database/charging center 24 encrypts the data, to which a request for use has been made and transmits it to the communication device 23 together with the decription key for decrypting the encrypted permit key, and charges a fee for use of the data.

Upon receipt of the encrypted data and the decryption key for encrypted permit key, the communication device 23 decrypts the encrypted permit key supplied from the receiving device 22 using the decription key for encrypted permit key and further decrypts the encrypted data transmitted from the database using the decrypted permit key so that the data will be ready for use.

In a system shown in Fig. 9, in which the present invention is applied to CATV, a CATV/charging center 30 supplies a non-crypted permit key to a broadcasting station in advance.

The broadcasting station 21 broadcasts the permit key supplied from the CATV/charging center 30.

A receiving device 22 receives the data of the permit key and sends it to a communication/picture receiving device 29.

The CATV/charging center 30 scrambles picture of the programs and transmits it to the communication/picture receiving device 29.

The CATV/charging center 30 charges a fee for viewing, which a viewer requested for viewing by indicating the broadcasting time using the communication/picture receiving device 29.

Upon receipt of the scrambled picture, the communication/picture receiving device 29 descrambles the scrambled picture transmitted from the CATV/charging center 30 using the permit key sent from the receiving device 22.

In a system shown in Fig. 10, to which the present invention is applied to CATV, a CATV/charging center 30 supplies a non-crypted permit key to a broadcasting station 21 in advance.

The broadcasting station 21 broadcasts the permit key supplied from the CATV/charging center 30.

A receiving device 22 sends the data of the permit key to a communication/picture receiving device 29.

The CATV/charging center 30 scrambles picture of the programs and transmits it to the communication/picture, receiving device 29.

The CATV/charging center 30 charges a fee for viewing, which a viewer requested for viewing by indicating the number of the program using the communication/picture receiving device 29.

Upon receipt of the scrambled picture, the communication/picture receiving device 29 descrambles the scrambled picture transmitted from the CATV/charging center 30 using the permit key supplied from the receiving device 22 so that the picture will be ready for viewing.

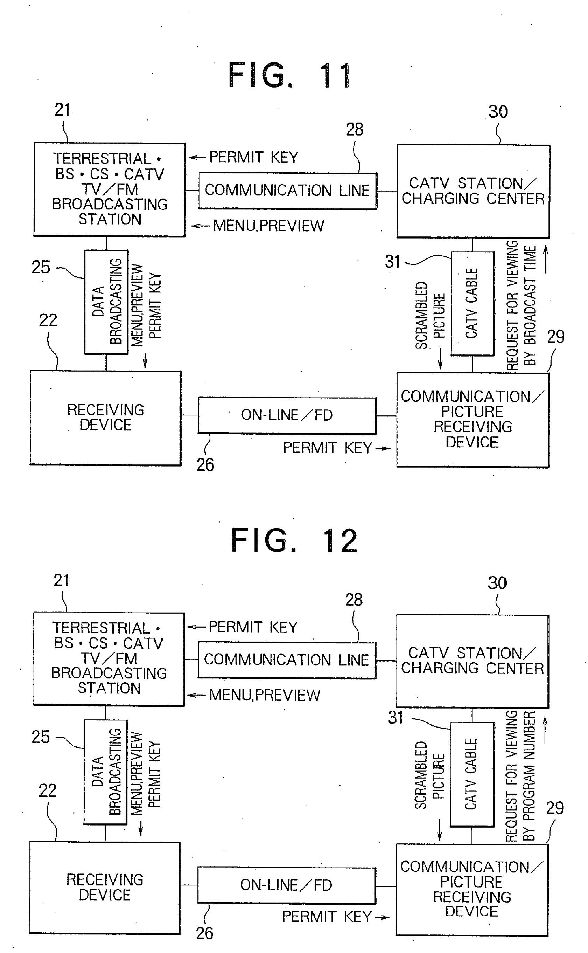

In a system shown in Fig. 11, to which the present invention is applied to CATV, a CATV/charging center 30 supplies a menu of the programs and a preview together with a non-crypted permit key to a broadcasting station 21 in advance.

The broadcasting station 21 broadcasts the permit key, the menu and the preview supplied from the CATV/charging center 30.

A receiving device 22 sends the received permit key, the menu and the preview to a communication/picture receiving device 29.

The CATV/charging center 30 scrambles picture of the programs and transmits it to a communication/picture receiving device 29.

The CATV/charging center 30 charges a fee for viewing, which a viewer requested for viewing by indicating the broadcasting time using the communication/picture receiving device 29.

Upon receipt of the scrambled picture, the communication/picture receiving device 29 descrambles the scrambled pictures transmitted from the CATV/charging center 30 using the permit key sent from the receiving device 22 so that the picture will be ready for viewing.

In a system shown in Fig. 12, in which the present invention is applied to CATV, a CATV/charging center 30 supplies a menu of programs and a preview together with a non-crypted permit key to a broadcasting station 21 in advance.

The broadcasting station 21 broadcasts the menu and the preview together with the permit key supplied from the CATV/charging center 30.

The receiving device 22 sends the received permit key, the menu and the preview to the communication/picture receiving device 29.

The CATV/charging center 30 scrambles picture of the programs and transmits it to the communication/picture receiving device 29.

The CATV/charging center 30 charges a fee for viewing, which a viewer requested for viewing by indicating the number of the program using the communication/picture receiving device 29.

Upon receipt of the scrambled picture, the communication/picture receiving device 29 descrambles the scrambled picture transmitted from the CATV/charging center 30 using the permit key supplied from the receiving device 22 so that the picture will be ready for viewing.

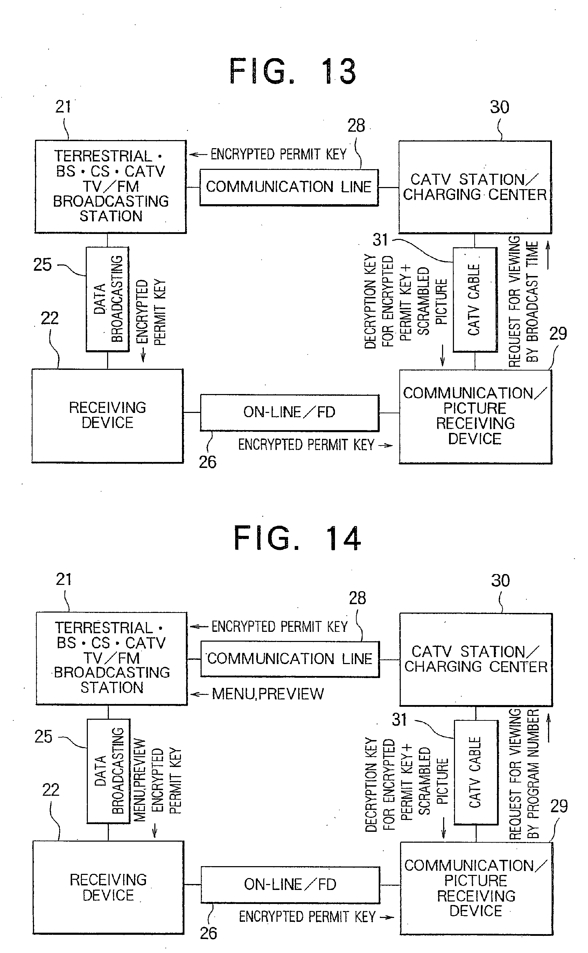

In a system shown in Fig. 13, in which the present invention is applied to CATV, a CATV/charging center 30 supplies a menu of programs and a preview together with an encrypted permit key to a broadcasting station 21 in advance.

In this system, the menu and the preview are not necessarily needed and these may not be supplied.

The broadcasting station 21 broadcasts the encrypted permit key, the menu and the preview supplied from the CATV/charging center 30.

The receiving device 22 supplies the received encrypted permit key, the menu and the preview to the communication/picture receiving device 29.

The CATV/charging center 30 transmits a key for decrypting the encrypted permit key together with the scrambled picture of programs to the communication/picture receiving device 29.

The CATV/charging center 30 charges a fee for viewing, which a viewer requested for viewing by indicating the broadcasting time using the communication/picture receiving device 29.

Upon receipt of the scrambled picture and the key, the communication/picture receiving device 29 decrypts the encrypted permit key supplied from the receiving device 22 using the received key and then, descrambles the scrambled picture transmitted from the CATV/charging center 30 using the decrypted permit key so that the picture will be ready for viewing.

In a system shown in Fig. 14, in which the present invention is applied to CATV, the CATV/charging center 30 supplies a menu of programs, a preview together with an encrypted permit key to a broadcasting station 21 in advance.

In this system, the menu and the preview are not necessarily needed, but it is preferable that they are supplied for the convenience of a viewer.

The broadcasting station 21 broadcasts the encrypted permit key, the menu and the preview supplied from the CATV/charging center 30.

The receiving device 22 supplies the encrypted permit key to the communication/picture receiving device.

The CATV/charging center 30 transmits a key for decrypting the encrypted permit key together with the scrambled picture of the desired program to the communication/picture receiving device 29.

The CATV/charging center 30 charges a fee for viewing, which a viewer requested for viewing by indicating the program number of the desired program using the communication/picture receiving device 29.

Upon receipt of the scrambled pictures and the key, the communication/picture receiving device 29 decrypts the encrypted permit key supplied from the receiving device 22 using the received key, and descrambles the scrambled picture transmitted from the CATV/charging center 30 using the decrypted permit key so that the picture will be ready for viewing.

## Claims

1. Method for decrypting encrypted data for use by a permit key including a decryption key, with the steps:
broadcasting an encrypted permit key;
transmitting said encrypted data from a database host station;
decrypting said encrypted permit key by said decryption key, which is incorporated in an equipment used or delivered in advance; and
decrypting said encrypted data by said decrypted permit key.

2. Method for descrambling a scrambled picture using a permit key including a key for descrambling, with the steps:
broadcasting an encrypted permit key;
transmitting said scrambled picture from a CATV station;
decrypting said encrypted permit key by a key for decryption, which is incorporated in an equipment used or delivered in advance; and
descrambling said scrambled picture by said decrypted permit key.

3. Method for decrypting encrypted data for use by a permit key including a decryption key with the steps:
broadcasting an encrypted permit key;
transmitting a key for decrypting said encrypted permit key together with said encrypted data from a database host station;
decrypting said encrypted permit key by said key for decrypting; and
decrypting said encrypted data by said decrypted permit key.

4. Method for descrambling a scrambled picture for viewing by a permit key including a key for descrambling, with the steps:
broadcasting an encrypted permit key;
transmitting a key for decrypting said encrypted permit key together with said scrambled picture from a CATV station;
decrypting said encrypted permit key by said key for decrypting; and
descrambling said scrambled picture by said decrypted permit key.
